# EUROPEAN PATENT APPLICATION

(11) **EP 4 007 411 A1**
(43) Date of publication of application: **01.06.2022**
(21) Application number: 20853470.1
(22) Date of filing: 23.07.2020
(51) Int. Cl.: H04W 72/04, H04W 72/12

(54) **COMMUNICATION METHOD AND APPARATUS**

(30) Priority: 09.08.2019 CN 201910734470
(71) Applicant: Huawei Technologies Co., Ltd., Longgang District Shenzhen, Guangdong 518129 (CN)
(72) Inventor: ZHANG, Meng, Shenzhen, Guangdong 518129 (CN); XUE, Jiantao, Shenzhen, Guangdong 518129 (CN); HAN, Jing, Shenzhen, Guangdong 518129 (CN)
(74) Representative: Goddar, Heinz J.
(86) International application number: PCT/CN2020/103873
(87) International publication number: WO 2021/027520

(57) **Abstract**

This application provides a communication method and apparatus. According to the method, a network device may send a first message to a terminal apparatus, where the first message indicates the terminal apparatus to perform BWP switching. In addition, the network device may send scheduling information to the terminal apparatus within first duration after sending the first message, where the scheduling information is used to schedule data of the terminal apparatus. According to the foregoing method, the network device can continue to schedule uplink and downlink data of the terminal apparatus within the first duration after sending BWP switching signaling to the terminal. Therefore, duration in which the terminal cannot perform data transmission because there is no data scheduling in a BWP switching process can be shortened, and a waste of transmission resources can be reduced.

## Description

### CROSS-REFERENCE TO RELATED APPLICATIONS

This application claims priority to Chinese Patent Application No. 201910734470.3, filed with the China National Intellectual Property Administration on August 9, 2019 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

A terminal (UE) in new radio (new radio, NR) works in a bandwidth part (bandwidth part, BWP) instead of entire cell bandwidth. When the UE needs to switch from one BWP to another BWP for working, the UE needs to perform BWP switching. For example, the UE may perform BWP switching according to a BWP switching indication sent by a network device.

In a current BWP switching process, the network device stops scheduling data of the UE when sending the BWP switching indication to the UE, and does not continue to schedule the data of the UE in the BWP obtained through switching until the BWP switching is completed. Consequently, time for stopping scheduling the data is excessively long. Therefore, in the current BWP switching process, a large quantity of transmission resources cannot be used for data scheduling, and there is a problem of a waste of transmission resources.

### SUMMARY

This application provides a communication method and apparatus, to reduce a waste of transmission resources in a BWP switching process.

According to a first aspect, this application provides a communication method. The method may be implemented by a network device, or may be implemented by a specific chip in the network device. For example, the network device may be a base station or a NodeB. According to the method, the network device may send a first message to a terminal apparatus, where the first message indicates the terminal apparatus to perform BWP switching. In addition, the network device may send scheduling information to the terminal apparatus within first duration after sending the first message, where the scheduling information is used to schedule data of the terminal apparatus.

According to the foregoing method, the network device can continue to schedule uplink and downlink data of the terminal within the first duration after sending BWP switching signaling to the terminal. Therefore, duration in which the terminal cannot perform data transmission because there is no data scheduling in a BWP switching process can be shortened compared with duration in a conventional technology, and a waste of transmission resources can be reduced.

In a possible design, the first duration may be determined in two subsequent manners: The network device may send a second message to the terminal apparatus, where the second message indicates the first duration; or alternatively, the network device may receive a third message from the terminal apparatus, where the third message indicates the first duration. Therefore, the network device or the terminal may determine the first duration, to implement flexible configuration of the first duration.

For example, the foregoing second message may be carried in a system message or a radio resources configuration (radio resources configuration, RRC) message. The foregoing third message may include an RRC BWP switching capability of the terminal apparatus, and the RRC BWP switching capability of the terminal apparatus corresponds to the first duration, so that corresponding first duration can be indicated based on an RRC BWP switching capability of a specific terminal apparatus.

The foregoing first duration may be less than or equal to a procedure delay of the first message, so that the terminal apparatus can continue to perform data transmission in the BWP switching process, and a waste of resources is reduced. The procedure delay of the first message may be indicated by the network device to the terminal apparatus, or may be determined by the network device and the terminal apparatus according to a protocol or in a predefined manner. For example, the network device and the terminal apparatus may default that the first duration is equal to the procedure delay of the first message, and a value of the first duration does not need to be separately indicated, to reduce signaling.

According to a second aspect, this application provides a communication method. The method may be implemented by a terminal apparatus, or may be performed by a chip in the terminal apparatus. According to the method, the terminal apparatus may receive a first message from a network device, where the first message is used to configure the terminal apparatus to perform BWP switching. Within first duration after receiving the first message, the terminal apparatus may further receive scheduling information from the network device, and perform data transmission based on the scheduling information.

According to the foregoing method, the terminal apparatus can continue to perform transmission of uplink and downlink data within the first duration after receiving BWP switching signaling. Therefore, duration in which the terminal cannot perform data transmission because there is no data scheduling in a BWP switching process can be shortened compared with duration in a conventional technology, and a waste of transmission resources can be reduced.

In a possible design, the first duration may be determined in two subsequent manners: The terminal apparatus may further receive a second message from the network device, where the second message indicates the first duration; or the terminal apparatus may send a third message to the network device, where the third message indicates the first duration.

For example, the foregoing second message may be carried in a system message or an RRC message. The foregoing third message may include an RRC BWP switching capability of the terminal apparatus, and the RRC BWP switching capability corresponds to the first duration, so that first duration corresponding to the network device can be indicated based on an RRC BWP switching capability of a specific terminal apparatus.

The foregoing first duration may be less than or equal to a procedure delay of the first message, so that the terminal apparatus can continue to perform data transmission in the BWP switching process, and a waste of resources is reduced.

Optionally, after second duration after receiving the first message, the terminal apparatus may receive scheduling information from the network device in a BWP obtained through switching, and perform data transmission based on the scheduling information, where the second duration may be equal to a sum of the first duration and third duration, and the third duration is duration of performing BWP switching by the terminal apparatus.

In this way, the terminal apparatus can continue, after the BWP switching succeeds, to perform data transmission in a new BWP based on new scheduling information sent by the network device, so that data transmission is not interrupted in the BWP switching process and after the switching.

In an example, the terminal apparatus may receive, based on an automatic gain control (automatic gain control, AGC) parameter corresponding to a BWP used before switching, the scheduling information from the network device in the BWP obtained through switching. According to this design, the terminal apparatus may continue to use the AGC parameter used before the BWP switching, and adjust the AGC parameter by using the BWP obtained through switching, to avoid re-determining an AGC parameter based on the BWP obtained through switching, to shorten AGC parameter configuration duration, and reduce a transmission delay caused by AGC parameter configuration.

In another example, the terminal apparatus may further determine, based on frequency of the BWP obtained through switching, an AGC parameter corresponding to the BWP obtained through switching, and receive, based on the AGC parameter corresponding to the BWP obtained through switching, the scheduling information from the network device in the BWP obtained through switching, to continue to perform data transmission in the new BWP based on the new scheduling information sent by the network device, so that data transmission is not interrupted in the BWP switching process and after the switching.

According to a third aspect, an embodiment of this application provides a communication apparatus. The communication apparatus may be configured to perform the step performed by the network device in any one of the first aspect or the possible designs of the first aspect. The communication apparatus may implement the functions in the foregoing methods in a form of a hardware structure, a software module, or a combination of the hardware structure and the software module. In addition, for effects that can be achieved by various technical means performed by the communication apparatus or technical features, refer to the effect descriptions of corresponding technical features in any one of the first aspect or the possible designs of the first aspect. Repeated descriptions are not provided again.

When the communication apparatus shown in the third aspect is implemented by using the software module, the communication apparatus may include a communication module and a processing module that are coupled to each other. The communication module may be configured to support the communication apparatus in performing communication, and the processing module may be used by the communication apparatus to perform a processing operation, for example, generate information/a message that needs to be sent, or process a received signal to obtain information/a message.

When performing the steps in the first aspect, the communication module may be configured to send a first message to a terminal apparatus, where the first message indicates the terminal apparatus to perform BWP switching. The communication module may be further configured to send scheduling information to the terminal apparatus within first duration after sending the first message, where the scheduling information is used to schedule data of the terminal apparatus.

In a possible example, the communication module may be further configured to send a second message to the terminal apparatus, where the second message indicates the first duration. Alternatively, the communication module may be further configured to receive a third message from the terminal apparatus, where the third message indicates the first duration.

The foregoing second message may be carried in a system message or an RRC message. The foregoing third message may include an RRC BWP switching capability of the terminal apparatus, and the RRC BWP switching capability of the terminal apparatus may correspond to the first duration.

The foregoing first duration may be less than or equal to a procedure delay of the first message.

When the communication apparatus shown in the third aspect is implemented by using a hardware component, the communication apparatus may include a memory, a processor, and a transceiver. The memory may be configured to store instructions, and the processor may be configured to invoke the instructions from the memory and run the instructions, to perform, by using the transceiver, the step performed by the network device in any one of the first aspect or the possible designs of the first aspect. Specifically, the transceiver may be configured to perform the steps performed by the foregoing communication module.

According to a fourth aspect, an embodiment of this application provides a communication apparatus. The communication apparatus may be configured to perform the step performed by the terminal apparatus in any one of the second aspect or the possible designs of the second aspect. The communication apparatus may implement the functions in the foregoing methods in a form of a hardware structure, a software module, or a combination of the hardware structure and the software module. In addition, for effects that can be achieved by various technical means performed by the communication apparatus or technical features, refer to the effect descriptions of corresponding technical features in any one of the second aspect or the possible designs of the second aspect. Repeated descriptions are not provided again.

When the communication apparatus shown in the fourth aspect is implemented by using the software module, the communication apparatus may include a communication module and a processing module that are coupled to each other. The communication module may be configured to support the communication apparatus in performing communication, and the processing module may be used by the communication apparatus to perform a processing operation, for example, generate information/a message that needs to be sent, or process a received signal to obtain information/a message.

When performing the steps in the second aspect, the communication module may be configured to receive a first message from a network device, where the first message is used to configure the terminal apparatus to perform BWP switching. The communication module may be further configured to: within first duration after receiving the first message, receive scheduling information from the network device, and perform data transmission based on the scheduling information.

In a possible example, the communication module may be further configured to receive a second message from the network device, where the second message indicates the first duration. Alternatively, the communication module may be further configured to send a third message to the network device, where the third message indicates the first duration.

The foregoing second message may be carried in a system message or an RRC message. The foregoing third message may include an RRC BWP switching capability of the terminal apparatus, and the RRC BWP switching capability may correspond to the first duration.

The foregoing first duration may be less than or equal to a procedure delay of the first message.

Optionally, after second duration after receiving the first message, the communication module may further receive scheduling information from the network device in a BWP obtained through switching, and perform data transmission based on the scheduling information. The second duration may be equal to a sum of the first duration and third duration, and the third duration is duration of performing BWP switching by the terminal apparatus.

In an example, the communication module may specifically receive, based on an AGC parameter corresponding to a BWP used before switching, the scheduling information from the network device in the BWP obtained through switching. In another example, the communication module may determine, based on frequency of the BWP obtained through switching, an AGC parameter corresponding to the BWP obtained through switching, and receive, based on the AGC parameter corresponding to the BWP obtained through switching, the scheduling information from the network device in the BWP obtained through switching.

When the communication apparatus shown in the fourth aspect is implemented by using a hardware component, the communication apparatus may include a memory, a processor, and a transceiver. The memory may be configured to store instructions, and the processor may be configured to invoke the instructions from the memory and run the instructions, to perform, by using the transceiver, the step performed by the terminal apparatus in any one of the second aspect or the possible designs of the second aspect. Specifically, the transceiver may be configured to perform the steps performed by the foregoing communication module.

According to a fifth aspect, this application provides a communication system. The communication system may include the communication apparatus shown in the third aspect and the communication apparatus shown in the fourth aspect. The communication apparatus shown in the third aspect may include a software module and/or a hardware component. The communication apparatus shown in the fourth aspect may include a software module and/or a hardware component.

For example, the communication apparatus in the third aspect is a network device and the communication apparatus in the fourth aspect is a terminal apparatus. In the communication system provided in this embodiment of this application, the network device may send a first message to the terminal apparatus, where the first message indicates the terminal apparatus to perform BWP switching. Correspondingly, the terminal apparatus may receive the first message from the network device. The network device may further send scheduling information to the terminal apparatus within first duration after sending the first message, where the scheduling information is used to schedule data of the terminal apparatus. Correspondingly, within the first duration after receiving the first message, the terminal apparatus may receive the scheduling information from the network device, and perform data transmission based on the scheduling information.

According to a sixth aspect, this application provides a computer storage medium. The computer storage medium stores instructions (or referred to as a program). When the instructions are invoked and executed on a computer, the computer is enabled to perform the method according to any one of the first aspect or the possible designs of the first aspect or according to any one of the second aspect or the possible designs of the second aspect.

According to a seventh aspect, this application provides a computer program product. The computer program product may include instructions. When the computer program product runs on a computer, the computer is enabled to perform the method according to any one of the first aspect or the possible designs of the first aspect or according to any one of the second aspect or the possible designs of the second aspect.

According to an eighth aspect, this application provides a chip and/or a chip system including the chip. The chip may include a processor. The chip may further include a memory (or a storage module) and/or a transceiver (or a communication module). The chip may be configured to perform the method according to any one of the first aspect or the possible designs of the first aspect or according to any one of the second aspect or the possible designs of the second aspect. The chip system may include the chip, or may include the chip and another discrete component, such as a memory (or a storage module) and/or a transceiver (or a communication module).

For beneficial effects of the second aspect to the eighth aspect and the possible designs of the second aspect to the eighth aspect, refer to the descriptions of the beneficial effects of the method according to any one of the first aspect or the possible designs of the first aspect.

### BRIEF DESCRIPTION OF DRAWINGS

FIG. 1 is a schematic diagram of an architecture of a wireless communication system according to an embodiment of this application;
FIG. 2 is a schematic flowchart according to an embodiment of this application;
FIG. 3 is a schematic diagram of a time sequence of performing BWP switching by a terminal according to an embodiment of this application;
FIG. 4 is a schematic diagram of a structure of a communication apparatus according to an embodiment of this application;
FIG. 5 is a schematic diagram of a structure of a communication apparatus according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment.

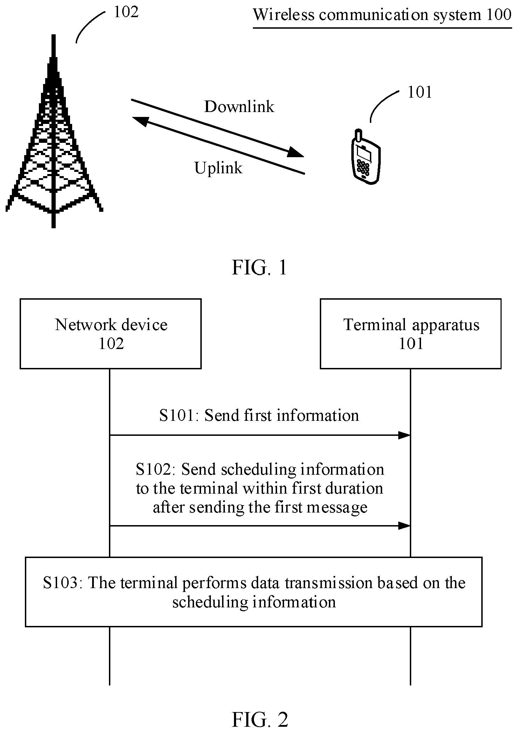

As shown in FIG. 1, a communication method provided in an embodiment of this application may be applied to a wireless communication system 100. The wireless communication system may include a terminal apparatus 101 and a network device 102. The terminal apparatus 101 is configured to support carrier aggregation, and the terminal apparatus 101 may be connected to a plurality of component carriers of the network device 102 that include one primary component carrier and one or more secondary component carriers.

It should be understood that the foregoing wireless communication system 100 is applicable to both a low-frequency scenario (sub 6G) and a high-frequency scenario (above 6G). An application scenario of the wireless communication system 100 includes but is not limited to a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a cloud radio access network (cloud radio access network, CRAN) system, a future fifth generation system, a new radio (new radio, NR) communication system, a future evolved public land mobile network (public land mobile network, PLMN) system, or the like.

The foregoing terminal apparatus 101 may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal apparatus, or the like. The terminal apparatus 101 may have a wireless transceiver function. The terminal apparatus 101 can communicate (for example, perform wireless communication) with one or more network devices in one or more communication systems, and receive network service provided by the network device. The network device herein includes but is not limited to the network device 102 shown in the figure.

The terminal apparatus 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, a terminal device in a future 5G network, a terminal device in a future evolved PLMN network, or the like.

The terminal apparatus 101 may be deployed on land, and includes an indoor or outdoor apparatus, a handheld apparatus, or a vehicle-mounted apparatus. The terminal apparatus 101 may alternatively be deployed on water (for example, on a ship). The terminal apparatus 101 may alternatively be deployed in the air (for example, on an aircraft, a balloon, and a satellite). The terminal apparatus 101 may be specifically a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in a telemedicine (telemedicine), a wireless terminal in a smart grid (smart grid), a wireless terminal in transportation safety (transportation safety), a wireless terminal in a smart city (smart city), a wireless terminal in a smart home (smart home), and the like. Alternatively, the terminal apparatus 101 may be a communication chip having a communication module.

The network device 102 may be an access network device (or referred to as an access network site). The access network device is a device that provides a network access function, for example, a radio access network (radio access network, RAN) base station. The network device 102 may specifically include abase station (base station, BS), or include the base station, a radio resource management device configured to control the base station, and the like. The network device 102 may further include a relay station (a relay device), an access point, and a base station in the future 5G network, a base station in the future evolved PLMN network, an NR base station, or the like. The network device 102 may be a wearable device or a vehicle-mounted device. Alternatively, the network device 102 may be a communication chip having a communication module.

For example, the network device 102 includes but is not limited to a gNodeB (gNodeB, gNB) in 5G, an evolved NodeB (evolved NodeB, eNB) in the LTE system, a radio network controller (radio network controller, RNC), a NodeB (NodeB, NB) in a WCDMA system, a radio controller in the CRAN system, a base station controller (base station controller, BSC), a base transceiver station (base transceiver station, BTS) in a GSM system or a CDMA system, a home base station (for example, a home evolved NodeB or a home NodeB, HNB), a baseband unit (baseband unit, BBU), a transmission reception point (transmission reception point, TRP), a transmitting point (transmitting point, TP), a mobile switching center, and the like.

The wireless communication system 100 shown in FIG. 1 is used as an example. In NR, the network device 102 may indicate, by using signaling, for example, RRC signaling (or referred to as an RRC message) or a downlink control indicator (downlink control indicator, DCI), sent to the terminal apparatus 101, the terminal apparatus 101 to perform BWP switching. In this application, for ease of description, the signaling used to indicate the terminal apparatus 101 to perform BWP switching may be referred to as a first message subsequently. The first message may be used to carry configuration information related to the BWP switching, for example, information used to indicate a BWP obtained through switching and/or related information such as frequency or bandwidth of the BWP obtained through switching.

In addition, the network device 102 may configure a signaling procedure delay for the terminal apparatus 101. The signaling procedure delay may correspond to a message type. For example, an RRC signaling procedure delay (RRC signaling procedure delay) may be configured for the RRC signaling. The terminal apparatus 101 starts to perform BWP switching after the signaling procedure delay after a moment of receiving the first message.

For example, the first message is the RRC signaling. In current NR, because the network device 102 no longer schedules data of the terminal apparatus 101 when sending the RRC signaling, the terminal apparatus 101 cannot perform data transmission within duration of at least X+Y milliseconds (ms). X is the RRC signaling procedure delay, and is usually 10 ms, the terminal apparatus 101 parses the first message within the duration of X, and the terminal apparatus 101 may perform BWP switching based on the first message after the duration of X. Y is duration of performing BWP switching by the terminal apparatus 101, and is usually 6 ms. It can be learned that currently, when BWP switching is performed, duration in which the terminal apparatus 101 cannot perform data transmission may reach 16 ms. It can be learned that the duration in which data transmission cannot be performed is excessively long. Consequently, transmission resources are wasted.

To resolve the foregoing technical problem, it is proposed in embodiments of the present invention that when the network device sends, to the terminal apparatus, the first message used to indicate to perform BWP switching, the network device continues to schedule data for transmission for the terminal apparatus within first duration after sending the first message, and the terminal apparatus continues to receive and send the data based on scheduling of the network device within the first duration after receiving the first message, to avoid, as much as possible, a problem that data transmission is interrupted in a BWP switching process of the terminal apparatus and transmission resources are wasted.

It should be understood that, in the following embodiments, at least one means one or more, that is, one, two, three, or more. "A plurality of' means two or more, that is, two, three, or more. Carrying may mean that a message is used to carry information or data, or may mean that the message includes the information. A coupling is an indirect coupling or a communication connection between apparatuses, units, or modules, may be in an electrical form, a mechanical form, or in another form, and is used for information exchange between the apparatuses, the units, or the modules.

As shown in FIG. 2, a communication method provided in an embodiment of this application may include the following steps.

S101: A network device 102 sends a first message to a terminal apparatus 101, where the first message is used to configure the terminal apparatus 101 to perform BWP switching. Correspondingly, the terminal apparatus 101 receives the first message from the network device 102.

S102: The network device 102 sends scheduling information to the terminal apparatus 101 within first duration after sending the first message, where the scheduling information is used to schedule data of the terminal apparatus 101.

The foregoing scheduling information is carried on a physical channel, and may be used to schedule uplink data or downlink data (or referred to as uplink and downlink data or the data) of the terminal apparatus 101. When the uplink data is scheduled, the scheduling information may include a DCI. Transmission of the DCI may be performed by using a physical downlink control channel (physical downlink control channel, PDCCH), and transmission of data scheduled by using the DCI may be performed by using a physical downlink shared channel (physical downlink shared channel, PDSCH). When the downlink data is scheduled, the scheduling information may include an uplink control indicator (uplink control indicator, UCI). Transmission of the UCI may be performed by using a physical uplink control channel (physical uplink control channel, PUCCH), and transmission of data scheduled by using the UCI may be performed by using a physical uplink shared channel (physical uplink shared channel, PUSCH).

S103: Within the first duration after receiving the first message, the terminal apparatus 101 receives the scheduling information from the network device 102, and performs data transmission based on the scheduling information.

According to the foregoing method, the network device can continue to schedule the uplink and downlink data of the terminal within the first duration after sending BWP switching signaling to the terminal, and within the first duration after receiving the first message, the terminal may receive the scheduling information, and perform transmission of the uplink and downlink data based on the scheduling information. Therefore, duration in which the terminal cannot perform data transmission in a BWP switching process can be shortened, and a waste of transmission resources can be reduced.

A value of the foregoing first duration may be expressed as x (ms). 0<x≤X. X is a signaling procedure delay corresponding to the first message. When the first message is an RRC message, the signaling procedure delay corresponding to the first message may be an RRC signaling procedure delay. When the first message is a message of another type, the signaling procedure delay corresponding to the first message may be a signaling procedure delay of the message of the type. The signaling procedure delay corresponding to the first message may be indicated by the network device 102 to the terminal apparatus 101, or may be determined by using a protocol or in a preconfigured manner.

There are a plurality of manners of determining the foregoing first duration, and the following provides descriptions by using examples.

Manner 1: The first duration is determined by the network device 102.

In Manner 1, the network device 102 may determine the first duration, and the network device 102 indicates the first duration to the terminal apparatus 101, so that the network device 102 and the terminal apparatus 101 agree on the value of the first duration. For example, the network device 102 may send a second message to the terminal apparatus 101, where the second message indicates the first duration. For example, the second message may carry the value of the first duration. For another example, the network device 102 may determine the first duration based on an RRC BWP switching capability (or referred to as RRC BWP switching capability information) of the terminal apparatus 101. The RRC BWP switching capability of the terminal apparatus 101 corresponds to a value that is of the first duration and that is supported by the terminal apparatus 101. Before sending the second message, the network device 102 may receive, from the terminal apparatus 101, the RRC BWP switching capability reported by the terminal apparatus 101, and determine the first duration based on the RRC BWP switching capability of the terminal apparatus 101.

It should be understood that the foregoing second message may be carried in a system message, an RRC message, or another message. This is not specifically limited in this application.

Manner 2: The first duration is determined by the terminal apparatus 101.

In Manner 2, the terminal apparatus 101 may determine the first duration, and the terminal apparatus 101 indicates the first duration to the network device 102, so that the terminal apparatus 101 and the network device 102 agree on the value of the first duration. In an example, the terminal apparatus 101 may send a third message to the network device 102, where the third message indicates the first duration. For example, the third message may carry the value of the first duration. For another example, the third message may carry an RRC BWP switching capability of the terminal apparatus 101. The RRC BWP switching capability of the terminal apparatus 101 corresponds to the value of the first duration. Therefore, the network device may determine the first duration based on the RRC BWP switching capability of the terminal apparatus 101.

Manner 3: The first duration is equal to the signaling procedure delay corresponding to the first message.

In Manner 3, the network device 102 and the terminal apparatus 101 may use, by default, the signaling procedure delay corresponding to the first message as the first duration, so that the terminal apparatus 101 and the network device 102 agree on the value of the first duration. The signaling procedure delay corresponding to the first message may be configured by the network device 102 for the terminal apparatus 101. For example, when the first message is the RRC message, the RRC signaling procedure delay may be determined as the first duration.

It should be understood that Manner 1 to Manner 3 above are merely examples for description, and should not be understood as that the manners of determining the first duration or the value of the determined first duration in this application is limited to the foregoing examples.

During implementation of S102, the network device 102 may start to send the scheduling information to the terminal apparatus 101 in a next slot of the last slot for scheduling the first message. In other words, the network device 102 may start to send the scheduling information to the terminal apparatus 101 in a next slot of the last slot occupied by the first message. Duration in which the network device 102 continues to schedule the uplink and downlink data of the terminal apparatus 101 after sending the first message may be the first duration.

For example, the foregoing first duration may be in a unit of ms. For example, the first duration is 8 ms. The network device 102 may continue to schedule the uplink and downlink data of the terminal apparatus 101 within 8 ms after sending the first message. In other words, the duration in which the network device 102 continues to schedule the uplink and downlink data of the terminal apparatus 101 is duration of one or more slots that is equivalent (where duration is equal) to the first duration. For example, the first duration is 8 ms, a length of each current slot is n ms, and the network device 102 may continue to schedule the uplink and downlink data of the terminal apparatus 101 within 8/n slots after sending the first message.

During implementation of S103, within the first duration in the next slot of the last slot for scheduling the first message, the terminal apparatus 101 may start to receive the scheduling information sent by the network device 102, and perform transmission of the uplink and downlink data based on the scheduling information. In other words, within the first duration in the next slot of the last slot occupied by the first message, the terminal apparatus 101 may start to receive the scheduling information sent by the network device 102, and perform transmission of the uplink and downlink data based on the scheduling information.

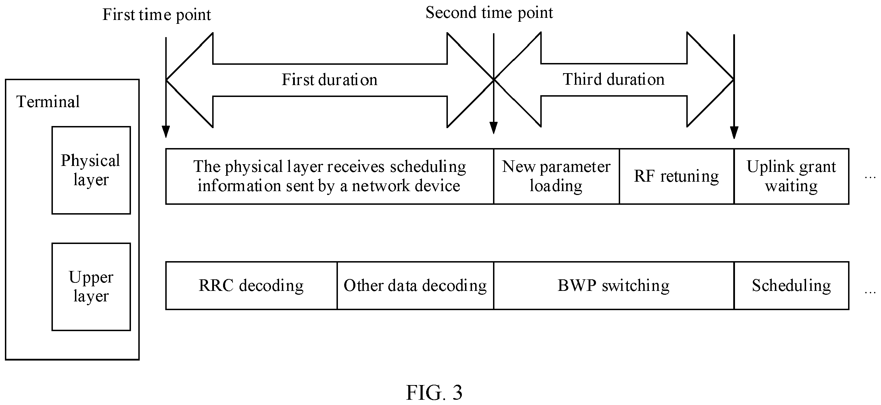

The following describes, with reference to FIG. 3, receiving of the first message by the terminal apparatus 101 and a processing process performed after receiving of the first message. FIG. 3 is a schematic diagram of a time sequence of the foregoing processing process.

When a physical layer (physical layer, PHY) of the terminal apparatus 101 receives a data packet of the first message (where a slot A is the last slot for scheduling the data packet), the physical layer cannot learn of specific content of the data packet. In this case, the physical layer may send the data packet and information about time

(referred to as a first time point hereinafter) at which the data packet is received to an upper layer of the terminal apparatus 101. The upper layer (upper layer) of the terminal apparatus 101 parses the data packet. Then the physical layer continues to monitor a radio frequency signal, and receives the scheduling information from the network device. The information about the first time point may be absolute time at which the slot A ends, or the information about the first time point may be an index of the slot A.

After parsing the data packet sent by the physical layer, the upper layer of the terminal apparatus 101 learns that the first message corresponding to the data packet indicates the terminal apparatus 101 to perform BWP switching. In this case, the upper layer of the terminal apparatus 101 may determine, based on the information about the first time point and the first duration, information about a time point at which the terminal apparatus 101 no longer receives the scheduling information from the network device 102 (in other words, determine information about a time point at which the terminal apparatus 101 stops receiving the scheduling information from the network device 102, where the information is referred to as information about a second time point hereinafter). When the information about the first time point is the absolute time, the information about the second time point may be absolute time. Specifically, the information about the second time point may be obtained by adding the first duration to the absolute time indicated by the first time point.

Alternatively, the information about the second time point may be represented by using an index of a slot. Specifically, the information about the first time point is the index of the slot A, and the terminal apparatus 101 may determine the information about the second time point based on the information about the first time point and a quantity of the slots corresponding to the first duration. For example, if the slot A (where the index is *k*) is the last slot occupied by the data packet of the first message, and the first duration is equivalent to a length of *l* slots, a slot C may be determined as the last slot in which the terminal apparatus 101 receives the scheduling information from the network device 102. An index of the slot C is *k*+*l,* and the length of the *l* slots is equal to the first duration. In other words, the terminal apparatus 101 may continue to receive the scheduling information from the network device 102 in a slot whose index is *k*+1 to the slot whose index is *k*+*l.* In other words, the terminal apparatus 101 starts, in a slot whose index is *k*+*l*+1*,* to no longer receive the scheduling information sent by the network device 102.

After determining the second time point, the upper layer of the terminal apparatus 101 may indicate the information about the second time point to the physical layer. The physical layer no longer receives the scheduling information from the network device 102 after a slot in which the second time point is located ends. For example, the terminal apparatus 101 may no longer monitor (in other words, detect) the scheduling information from the network device 102 after the slot in which the second time point is located ends.

For example, after second duration after receiving the first message, the terminal apparatus 101 may receive scheduling information from the network device 102 in a BWP obtained through switching, and perform data transmission based on the scheduling information. The second duration is equal to (or not less than) a sum of the first duration and third duration, and the third duration is duration of performing BWP switching by the terminal apparatus. For example, the physical layer of the terminal apparatus 101 may read and load (loading) a new parameter and perform radio frequency (radio frequency, RF) retuning (retuning) within the third duration based on the BWP obtained through switching. The upper layer of the terminal apparatus 101 may perform BWP switching within the third duration, so that after the third duration, the terminal apparatus 101 may work in the BWP obtained through switching. As shown in FIG. 3, within the third duration after the second time point, the physical layer of the terminal apparatus 101 may not receive the scheduling information sent by the network device 102. In other words, scheduling of the terminal apparatus 101 is limited within the third duration after the second time point.

After BWP switching is performed, the network device 102 may continue to send the scheduling information to the terminal apparatus 101 based on the BWP obtained through switching, to schedule the data of the terminal apparatus 101. Specifically, the network device 102 may start, in a next slot of a slot in which the second duration after the first message is sent ends, to send the scheduling information to the terminal apparatus 101 by using the BWP obtained through switching. The terminal apparatus 101 may start, in a next slot of a slot in which the second duration after the first message is received ends, to receive the scheduling information by using the BWP obtained through switching.

In a possible example, when reading and loading the new parameter, the terminal apparatus 101 may use an AGC parameter corresponding to a BWP used before switching as an AGC parameter used in the BWP obtained through switching. The AGC parameter corresponding to the BWP used before switching is an AGC parameter used when the terminal apparatus 101 receives the radio frequency signal by using the BWP used before switching. The terminal apparatus 101 may adjust the AGC parameter in a subsequent debugging process based on the BWP obtained through switching.

In an AGC parameter adjustment process, the terminal apparatus 101 may first receive the radio frequency signal by using a particular AGC parameter such as the AGC parameter corresponding to the BWP used before switching, and then recalculate the AGC parameter by using the scheduling information transmitted by using the radio frequency signal, to obtain more accurate and higher-order scheduling. For a method for recalculating the AGC parameter, refer to a conventional technology. According to the design, a process in which the terminal apparatus 101 re-determines the AGC parameter can be avoided, to shorten duration required for parameter configuration.

In another possible example, when reading and loading the new parameter, the terminal apparatus 101 may determine, based on information such as frequency or bandwidth of the BWP obtained through switching, the AGC parameter corresponding to the BWP obtained through switching, and perform data scheduling and transmission based on the AGC parameter. The information such as the frequency or the bandwidth of the BWP obtained through switching may be carried in the first message, or may be indicated by the network device 102 to the terminal apparatus 101 by using another message. The terminal apparatus 101 may adjust the AGC parameter in the subsequent debugging process.

Based on a same technical concept as that in the foregoing method embodiment, the embodiments of this application further provides a communication apparatus. The communication apparatus may have the function of the network device or the terminal in the foregoing method embodiment, and may be configured to perform the steps performed by the network device or the terminal and provided in the foregoing method embodiment. The function may be implemented by hardware, or may be implemented by software or hardware executing corresponding software. The hardware or software includes one or more modules corresponding to the foregoing function.

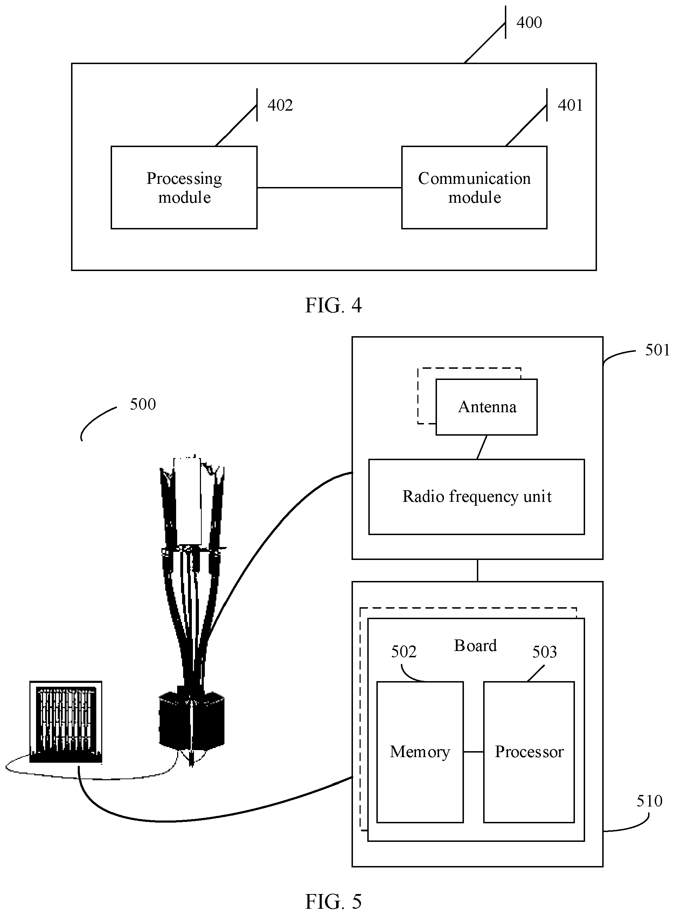

In a possible implementation, a communication apparatus 400 shown in FIG. 4 may be used as the network device in the foregoing method embodiment, and perform the steps performed by the network device (for example, the network device 102) in the foregoing method embodiment. As shown in FIG. 4, the communication apparatus 400 may include a communication module 401 and a processing module 402. The communication module 401 and the processing module 402 are coupled to each other. The communication module 401 may be configured to support the communication apparatus 400 in communicating. The communication module 401 may have a wireless communication function, for example, can perform wireless communication with another communication apparatus by using a wireless air interface. The processing module 402 may be configured to support the communication apparatus 400 in performing the processing action in the foregoing method embodiment, including but not limited to: generating information and a message that are sent by the communication module 401 and/or demodulating and decoding a signal received by the communication module 401.

When performing the steps performed by the network device, the communication module 401 may be configured to send a first message to a terminal apparatus, where the first message indicates the terminal apparatus to perform BWP switching. The communication module 401 may be further configured to send scheduling information to the terminal apparatus within first duration after sending the first message, where the scheduling information is used to schedule data of the terminal apparatus.

In a possible example, the communication module 401 may be further configured to send a second message to the terminal apparatus, where the second message indicates the first duration. Alternatively, the communication module 401 may be further configured to receive a third message from the terminal apparatus, where the third message indicates the first duration.

For example, the foregoing second message may be carried in a system message or an RRC message, or certainly may be carried in another message. This is not limited herein in this application. In addition, the foregoing third message may include an RRC BWP switching capability of the terminal apparatus, and the RRC BWP switching capability of the terminal apparatus may correspond to the first duration, to indicate the first duration based on the RRC BWP switching capability of the terminal apparatus. In this way, the network device can determine the first duration based on the RRC BWP switching capability of the terminal apparatus.

The foregoing first duration may be less than or equal to a procedure delay of the first message. To be specific, the network device may continuously schedule the data for the terminal apparatus within duration of parsing and processing the first message by the terminal apparatus, to ensure that after receiving the first message, the terminal apparatus may also synchronously perform data transmission when parsing and processing the first message.

In another possible implementation, the communication apparatus provided in the embodiments of this application may alternatively include hardware components, such as a processor, a memory, or a transceiver.

For ease of understanding, FIG. 5 uses a base station as an example to describe a structure of the communication apparatus. As shown in FIG. 5, the communication apparatus 500 may include a transceiver 501, a memory 502, and a processor 503. The transceiver 501 may be used by the communication apparatus to perform communication, for example, configured to send or receive the foregoing first message. The memory 502 is coupled to the processor 503, and may be configured to store a program and data that are necessary for the communication apparatus 500 to implement functions. The processor 503 is configured to support the communication apparatus 500 in performing corresponding functions in the foregoing method. The functions may be implemented by invoking the program stored in the memory 502.

Specifically, the transceiver 501 may be a wireless transceiver, and may be configured to support the communication apparatus 500 in receiving and sending signaling and/or data by using a wireless air interface. The transceiver 501 may also be referred to as a transceiver unit or a communication unit. The transceiver 501 may include a radio frequency unit and one or more antennas. The radio frequency unit such as a remote radio unit (remote radio unit, RRU) may be specifically configured to perform transmission of a radio frequency signal and conversion between the radio frequency signal to a baseband signal. The one or more antennas may be specifically configured to radiate and receive the radio frequency signal. Optionally, the transceiver 501 may include only the foregoing radio frequency unit. In this case, the communication apparatus 500 may include the transceiver 501, the memory 502, the processor 503, and the antenna.

The memory 502 and the processor 503 may be integrated or may be independent of each other. As shown in FIG. 5, the memory 502 and the processor 503 may be integrated into a control unit 510 in the communication apparatus 500. For example, the control unit 510 may include a baseband unit (baseband unit, BBU) of an LTE base station. The baseband unit may also be referred to as a digital unit (digital unit, DU). Alternatively, the control unit 510 may include a distributed unit (distributed unit, DU) and/or a centralized unit (centralized unit, CU) in a base station in 5G and a future radio access technology. The foregoing control unit 510 may include one or more boards. A plurality of boards may jointly support a radio access network (for example, an LTE network) of a single access standard, or may separately support radio access networks (for example, the LTE network, a 5G network, or another network) of different access standards. The memory 502 and the processor 503 may serve one or more boards. In other words, the memory 502 and the processor 503 may be separately disposed on each board. Alternatively, the plurality of boards may share a same memory 502 and a same processor 503. In addition, a necessary circuit may be disposed on each board. For example, the circuit may be configured to implement coupling between the memory 502 and the processor 503. The foregoing transceiver 501, the processor 503, and the memory 502 may be connected by using a bus (bus) structure or another connection medium.

Based on the structure shown in FIG. 5, when the communication apparatus 500 needs to send data, the processor 503 may perform baseband processing on the to-be-sent data, and output a baseband signal to the radio frequency unit. After performing radio frequency processing on the baseband signal, the radio frequency unit sends a radio frequency signal in a form of an electromagnetic wave through the antenna. When data is sent to the communication apparatus 500, the radio frequency unit receives a radio frequency signal through the antenna, converts the radio frequency signal into a baseband signal, and outputs the baseband signal to the processor 503. The processor 503 converts the baseband signal into data, and processes the data.

Based on the structure shown in FIG. 5, the transceiver 501 may be configured to perform the foregoing steps performed by the communication module 401; and/or the processor 503 may be configured to invoke instructions in the memory 502 to perform the foregoing steps performed by the processing module 402.

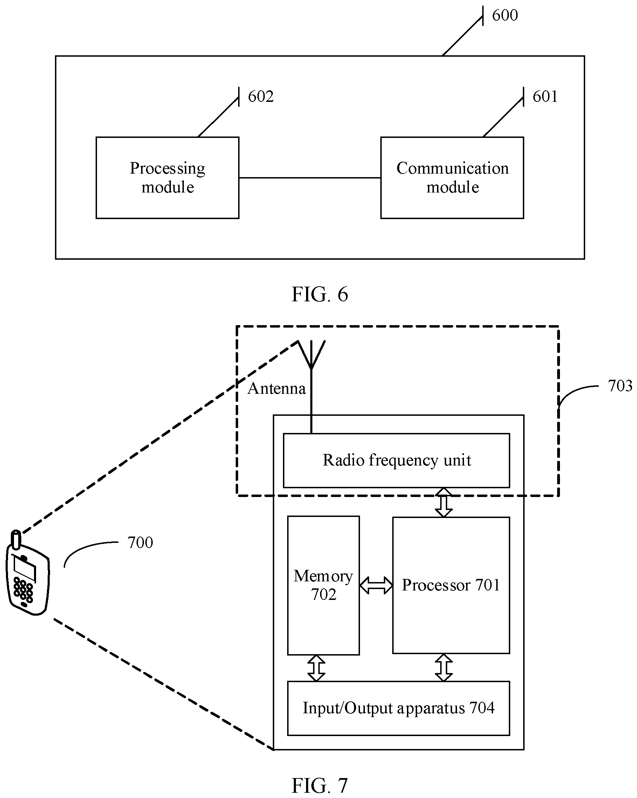

In a possible implementation, a communication apparatus 600 shown in FIG. 6 may be used as the terminal in the foregoing method embodiment, and perform the steps performed by the terminal (for example, the terminal apparatus 101) in the foregoing method embodiment. As shown in FIG. 6, the communication apparatus 600 may include a communication module 601 and a processing module 602. The communication module 601 and the processing module 602 are coupled to each other. The communication module 601 may be configured to support the communication apparatus 600 in communicating. The communication module 601 may have a wireless communication function, for example, can perform wireless communication with another communication apparatus by using a wireless air interface. The processing module 602 may be configured to support the communication apparatus 600 in performing the processing action in the foregoing method embodiment, including but not limited to: generating information and a message that are sent by the communication module 601 and/or demodulating and decoding a signal received by the communication module 601.

When performing the steps performed by the terminal, the communication module 601 may be configured to receive a first message from a network device, where the first message is used to configure the terminal apparatus to perform BWP switching. The communication module 601 may be further configured to: within first duration after receiving the first message, receive scheduling information from the network device, and perform data transmission based on the scheduling information.

In a possible example, the communication module 601 may be further configured to receive a second message from the network device, where the second message indicates the first duration. Alternatively, the communication module 601 may be further configured to send a third message to the network device, where the third message indicates the first duration.

The foregoing second message may be carried in a system message or an RRC message.

The foregoing third message may include an RRC BWP switching capability of the terminal apparatus, and the RRC BWP switching capability may correspond to the first duration.

The foregoing first duration may be less than or equal to a procedure delay of the first message.

Optionally, after second duration after receiving the first message, the communication module 601 may further receive scheduling information from the network device in a BWP obtained through switching, and perform data transmission based on the scheduling information. The second duration may be equal to a sum of the first duration and third duration, and the third duration is duration of performing BWP switching by the terminal apparatus.

In an example, the communication module 601 may specifically receive, based on an AGC parameter corresponding to a BWP used before switching, the scheduling information from the network device in the BWP obtained through switching.

In another example, the communication module 601 may determine, based on frequency of the BWP obtained through switching, an AGC parameter corresponding to the BWP obtained through switching; and receive, based on the AGC parameter corresponding to the BWP obtained through switching, the scheduling information from the network device in the BWP obtained through switching.

In another possible implementation, when the communication apparatus is the terminal apparatus 101, a structure of the communication apparatus may be shown in FIG. 7. For ease of understanding and convenience of figure illustration, an example in which the terminal device is a mobile phone is used to describe the structure of the communication apparatus in FIG. 7. As shown in FIG. 7, the communication apparatus 700 may include a processor 701, a memory 702, and a transceiver 703.

The foregoing processor 701 may be configured to: process a communication protocol and communication data, control the terminal device, execute a software program, process data of the software program, and the like. The memory 702 may be configured to store a program and data, and the processor 701 may perform, based on the program, the method performed by the terminal apparatus 101 in the embodiments of this application.

The transceiver 703 may include a radio frequency unit and an antenna. The radio frequency unit may be configured to: perform conversion between a baseband signal and a radio frequency signal, and process the radio frequency signal. The antenna may be configured to send and receive a radio frequency signal in a form of an electromagnetic wave. In addition, only the radio frequency unit may also be considered as the transceiver 703. In this case, the communication apparatus 700 may include the processor 701, the memory 702, the transceiver 703, and the antenna.

In addition, the communication apparatus 700 may further include an input/output apparatus 704, for example, a component such as a touchscreen, a display screen, or a keyboard that may be configured to receive data input by a user and output data to the user. It should be noted that some types of communication apparatuses may not have the input/output apparatus.

Based on the structure shown in FIG. 7, when the communication apparatus 700 needs to send data, the processor 701 may perform baseband processing on the to-be-sent data, and output a baseband signal to the radio frequency unit. After performing radio frequency processing on the baseband signal, the radio frequency unit sends a radio frequency signal in a form of an electromagnetic wave through the antenna. When data is sent to the communication apparatus 700, the radio frequency unit receives a radio frequency signal through the antenna, converts the radio frequency signal into a baseband signal, and outputs the baseband signal to the processor 701. The processor 701 converts the baseband signal into data, and processes the data.

For example, the communication apparatus 700 may be configured to perform the foregoing steps performed by the terminal apparatus 101. Specifically, the transceiver 703 may be configured to perform the foregoing steps performed by the communication module 601; and/or the processor 701 may be configured to invoke instructions stored in the memory 702, to perform the foregoing steps performed by the processing module 602.

Based on a same concept as that in the foregoing embodiment, an embodiment of this application further provides a computer storage medium. The computer storage medium stores some instructions. When the instructions are invoked and executed, a computer may be enabled to perform the method embodiment and the steps performed by the network device and/or the terminal in any possible implementation of the method embodiment. A readable storage medium is not limited in this embodiment of this application. For example, the readable storage medium may be a RAM (random-access memory, random-access memory) or a ROM (read-only memory, read-only memory).

Based on a same concept as that in the foregoing method embodiment, an embodiment of this application further provides a computer program product. When the computer program product is run by a computer, the computer may be enabled to perform the method embodiment and the steps performed by the network device and/or the terminal in any possible implementation of the method embodiment.

Based on a same concept as that in the foregoing method embodiment, an embodiment of this application further provides a communication system. The communication system may include the network device and/or the terminal provided in the embodiments of this application.

For example, in the communication system, the network device may send a first message to the terminal apparatus, where the first message indicates the terminal apparatus to perform BWP switching. Correspondingly, the terminal apparatus may receive the first message from the network device. The network device may further send scheduling information to the terminal apparatus within first duration after sending the first message, where the scheduling information is used to schedule data of the terminal apparatus. Correspondingly, within the first duration after receiving the first message, the terminal apparatus may receive the scheduling information from the network device, and perform data transmission based on the scheduling information.

Based on the same concept as that in the foregoing method embodiment, an embodiment of this application further provides a chip. The chip may include a processor, and the processor may be coupled to a transceiver. The chip may be configured to implement the method embodiment and the functions performed by the network device and/or the terminal in any possible implementation of the method embodiment.

In addition, an embodiment of this application further provides a chip system. The chip system may include the foregoing chip, or may include the chip and another discrete component. For example, the chip system may include the chip, a memory, and a communication module.

It should be understood that, the processor and the processing module in the foregoing embodiments may be a general-purpose processor, a digital signal processor, an application-specific integrated circuit, a field programmable gate array or another programmable logic component, a discrete gate or a transistor logic device, or a discrete hardware component. The processor and the processing module may implement or perform the methods, steps, and logical block diagrams disclosed in some embodiments of this application. The general-purpose processor may be a microprocessor, any conventional processor, or the like. The steps of the method disclosed with reference to some embodiments of this application may be directly performed and completed by a hardware processor, or may be performed and completed by using a combination of hardware and software modules in the processor.

The memory may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can be used to carry or store expected program code in a form of instructions or a data structure and that can be accessed by a computer. However, this is not limited thereto. The memory in some embodiments of this application may alternatively be a circuit or any other apparatus that can implement a storage function, and is configured to store program instructions and/or data.

The transceiver and the communication module may be a circuit, a component, a communication interface, a bus, a software module, a wireless transceiver, or any other component that can implement information/data receiving and sending.

All or some of the foregoing embodiments may be implemented by using software, hardware (for example, a circuit), firmware, or any combination thereof. When software is used to implement the foregoing embodiments, all or some of the embodiments may be implemented in a form of a computer program product. The computer program product includes one or more computer instructions or computer programs. When the computer instructions or the computer programs are loaded and executed on the computer, the procedure or functions according to some embodiments of this application are all or partially generated. The computer may be a general-purpose computer, a special-purpose computer, a computer network, or other programmable apparatuses. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

## Claims

1. A communication method, comprising:
sending, by a network device, a first message to a terminal apparatus, wherein the first message indicates the terminal apparatus to perform bandwidth part BWP switching; and
sending, by the network device, scheduling information to the terminal apparatus within first duration after sending the first message, wherein the scheduling information is used to schedule data of the terminal apparatus.

2. The method according to claim 1, wherein the method further comprises:
sending, by the network device, a second message to the terminal apparatus, wherein the second message indicates the first duration; or
receiving, by the network device, a third message from the terminal apparatus, wherein the third message indicates the first duration.

3. The method according to claim 2, wherein the second message is carried in a system message or a radio resources configuration RRC message.

4. The method according to claim 2, wherein the third message comprises an RRC BWP switching capability of the terminal apparatus, and the RRC BWP switching capability of the terminal apparatus corresponds to the first duration.

5. The method according to any one of claims 1 to 4, wherein the first duration is less than or equal to a procedure delay of the first message.

6. A communication method, comprising:
receiving, by a terminal apparatus, a first message from a network device, wherein the first message is used to configure the terminal apparatus to perform bandwidth part BWP switching; and
within first duration after receiving the first message, receiving, by the terminal apparatus, scheduling information from the network device, and performing data transmission based on the scheduling information.

7. The method according to claim 6, wherein the method further comprises:
receiving, by the terminal apparatus, a second message from the network device, wherein the second message indicates the first duration; or
sending, by the terminal apparatus, a third message to the network device, wherein the third message indicates the first duration.

8. The method according to claim 7, wherein the second message is carried in a system message or a radio resources configuration RRC message.

9. The method according to claim 7, wherein the third message comprises an RRC BWP switching capability of the terminal apparatus, and the RRC BWP switching capability corresponds to the first duration.

10. The method according to any one of claims 6 to 9, wherein the first duration is less than or equal to a procedure delay of the first message.

11. The method according to any one of claims 6 to 10, wherein the method further comprises:
after second duration after receiving the first message, receiving, by the terminal apparatus, scheduling information from the network device in a BWP obtained through switching, and performing data transmission based on the scheduling information, wherein the second duration is equal to a sum of the first duration and third duration, and the third duration is duration of performing BWP switching by the terminal apparatus.

12. The method according to claim 11, wherein the receiving, by the terminal apparatus, scheduling information from the network device in a BWP obtained through switching comprises:
receiving, by the terminal apparatus based on an automatic gain control AGC parameter corresponding to a BWP used before switching, the scheduling information from the network device in the BWP obtained through switching.

13. The method according to claim 11, wherein the receiving, by the terminal apparatus, scheduling information from the network device in a BWP obtained through switching comprises:
determining, by the terminal apparatus based on frequency of the BWP obtained through switching, an AGC parameter corresponding to the BWP obtained through switching; and
receiving, by the terminal apparatus based on the AGC parameter corresponding to the BWP obtained through switching, the scheduling information from the network device in the BWP obtained through switching.

14. A communication apparatus, comprising:
a communication module, configured to send a first message to a terminal apparatus, wherein the first message indicates the terminal apparatus to perform bandwidth part BWP switching, wherein
the communication module is further configured to send scheduling information to the terminal apparatus within first duration after sending the first message, wherein the scheduling information is used to schedule data of the terminal apparatus.

15. The communication apparatus according to claim 14, wherein the communication module is further configured to:
send a second message to the terminal apparatus, wherein the second message indicates the first duration; or
receive a third message from the terminal apparatus, wherein the third message indicates the first duration.

16. The communication apparatus according to claim 15, wherein the second message is carried in a system message or a radio resources configuration RRC message.

17. The communication apparatus according to claim 15, wherein the third message comprises an RRC BWP switching capability of the terminal apparatus, and the RRC BWP switching capability of the terminal apparatus corresponds to the first duration.

18. The communication apparatus according to any one of claims 14 to 17, wherein the first duration is less than or equal to a procedure delay of the first message.

19. A communication apparatus, comprising:
a communication module, configured to receive a first message from a network device, wherein the first message is used to configure the communication apparatus to perform bandwidth part BWP switching, wherein
the communication module is further configured to: within first duration after receiving the first message, receive scheduling information from the network device, and perform data transmission based on the scheduling information.

20. The communication apparatus according to claim 19, wherein the communication module is further configured to:
receive a second message from the network device, wherein the second message indicates the first duration; or
send a third message to the network device, wherein the third message indicates the first duration.

21. The communication apparatus according to claim 20, wherein the second message is carried in a system message or a radio resources configuration RRC message.

22. The communication apparatus according to claim 20, wherein the third message comprises an RRC BWP switching capability of the communication apparatus, and the RRC BWP switching capability corresponds to the first duration.

23. The communication apparatus according to any one of claims 19 to 22, wherein the first duration is less than or equal to a procedure delay of the first message.

24. The communication apparatus according to any one of claims 19 to 23, wherein the communication module is further configured to:
after second duration after receiving the first message, receive scheduling information from the network device in a BWP obtained through switching, and perform data transmission based on the scheduling information, wherein the second duration is equal to a sum of the first duration and third duration, and the third duration is duration of performing BWP switching by the communication apparatus.

25. The communication apparatus according to claim 24, wherein the communication module is specifically configured to:
receive, based on an automatic gain control AGC parameter corresponding to a BWP used before switching, the scheduling information from the network device in the BWP obtained through switching.

26. The communication apparatus according to claim 24, wherein the communication module is specifically configured to:
determine, based on frequency of the BWP obtained through switching, an AGC parameter corresponding to the BWP obtained through switching; and
receive, based on the AGC parameter corresponding to the BWP obtained through switching, the scheduling information from the network device in the BWP obtained through switching.

27. A communication apparatus, comprising a processor, wherein
the processor is configured to invoke instructions stored in a memory, to perform the method according to any one of claims 1 to 5.

28. A communication apparatus, comprising a processor, wherein
the processor is configured to invoke instructions stored in a memory, to perform the method according to any one of claims 6 to 13.

29. A communication system, comprising the communication apparatus according to any one of claims 14 to 18 or according to claim 27 and the communication apparatus according to any one of claims 19 to 26 or according to claim 28.

30. A computer-readable storage medium, comprising program instructions, wherein when the program instructions are run on a computer, the computer is enabled to perform the method according to any one of claims 1 to 13.

31. A computer program product, wherein when the computer program product is executed, the method according to any one of claims 1 to 13 is implemented.

32. A chip, comprising a processor, wherein the processor is configured to execute program instructions stored in a memory, to perform the method according to any one of claims 1 to 13.
